# EUROPÄISCHE PATENTANMELDUNG

(11) **EP 0 976 493 A2**
(43) Veröffentlichungstag der Anmeldung: **02.02.2000**
(21) Anmeldenummer: 99113234.1
(22) Anmeldetag: 08.07.1999
(51) Int. Cl.: B23Q 11/10

(54) **Verfahren zur Kühlung und/oder Schmierung**

(30) Priorität: 24.07.1998 DE 19833278
(71) Anmelder: Rhenus Lub GmbH & Co. KG, 41179 Mönchengladbach (DE)
(72) Erfinder: Bartholomaus, Theo, 40667 Meerbusch (DE); Lautenschläger, Hans, Dr., 50259 Pulheim-Stommeln (DE); Singer, Berndt, Dr., 41189 Mönchengladbach (DE); Schulz, Joachim, Dr., 41236 Mönchengladbach (DE)
(74) Vertreter: Lau-Loskill, Philipp, Dipl.-Phys.

(57) **Zusammenfassung**

Es wird ein Verfahren zur Kühlung und/oder Schmierung bei der Be- und/oder Verarbeitung von Werkstücken, insbesondere von Werkstücken aus Metall, Kunststoff, Glas oder Keramik, beschrieben. Hierbei wird der zur Kühlung bzw. Schmierung verwendete Schmierstoff unmittelbar vor seiner Anwendung durch intensive Vermischung von mindestens zwei, den Schmierstoff bildenden und getrennt aufbewahrten Flüssigkeiten erstellt, wobei als erste Flüssigkeit eine wasserhaltige hydrophile Flüssigkeit und als zweite Flüssigkeit eine hydrophobe Flüssigkeit ausgewählt werden.

## Beschreibung

Die vorliegende Erfindung betrifft ein Verfahren zur Kühlung und/oder Schmierung bei der Be- und/oder Verarbeitung von Werkstücken mit den Merkmalen des Oberbegriffs des Patentanspruchs 1.

Um Werkstücke, insbesondere Werkstücke aus Metall, Kunststoff, Glas oder Keramik, im Rahmen einer spanenden oder spanlosen Bearbeitung, so zum Beispiel beim Bohren, Schneiden, Schleifen, Fräsen, Stanzen, Drehen, Reiben, Gewindeformen und -bohren, Räumen o. dgl., zu be- bzw. verarbeiten, ist es bekannt, hier entsprechende Schmierstoffe anzuwenden. Hierbei bewirken diese Schmierstoffe, daß eine Kühlung und/oder Schmierung herbeigeführt wird, so daß insbesondere ein Verschleiß der Werkzeuge unterdrückt wird, daß ein Korrosionsschutz von Werkzeug und/oder Werkstück zumindestens temporär gegeben ist und daß Metallstaub und Späne abgeführt werden.

Abhängig von dem jeweiligen Einsatzgebiet unterscheidet man bei den Schmierstoffen grundsätzlich zwischen nicht wassermischbare und wassergemischte Schmierstoffe, wobei die nicht wassermischbaren Schmierstoffe ölige Flüssigkeiten auf der Basis von Mineralölen, Poly[a]olefinen, Ester oder nicht wassermischbare Polyglykole und die wassergemischten Schmierstoffe Lösungen oder Emulsionen der zuvor genannten öligen Substanzen mit Wasser darstellen. Mit anderen Worten werden somit die bekannten Schmierstoffe bezüglich ihrer Zusammensetzung auf den jeweiligen Anwendungsfalls konzeptioniert, was dazu führt, daß insbesondere bei nicht wassermischbaren Inhaltsstoffen geeignete Emulgator-Systeme erforderlich sind, um die zuvor genannten öligen, hydrophoben Bestandteile in eine stabile Emulsion zu überführen.

Die bekannte Schmierstoffe weisen den Nachteil auf, daß der jeweilige Anwender in der Regel eine Vielzahl von unterschiedlich aufgebauten Schmierstoffen bereithalten muß, um den speziellen Schmierstoff für die jeweilige Anwendung verfügbar zu haben.

Der vorliegenden Erfindung liegt die Aufgabe zugrunde, ein Verfahren der angegebenen Art zur Verfügung zu stellen, mit dem es in besonders einfacher Weise möglich ist, die Anzahl der verfügbaren Schmierstoffe bei Anwender zu minimieren.

Diese Aufgabe wird erfindungsgemäß durch ein Verfahren mit den kennzeichnenden Merkmalen des Patentanspruchs 1 gelöst.

Das erfindungsgemäße Verfahren zur Kühlung und/oder Schmierung bei der Be- und/oder Verarbeitung von Werkstücken, insbesondere von Werkstücken aus Metall, Kunststoff, Glas oder Keramik, sieht vor, daß der zur Kühlung bzw. Schmierung verwendete Schmierstoff unmittelbar vor seiner Anwendung durch intensive Vermischung von mindestens zwei, den Schmierstoff bildenden und getrennt aufbewahrten Flüssigkeiten erstellt wird. Hierbei wird bei dem erfindungsgemäßen Verfahren als erste Flüssigkeit eine wasserhaltige hydrophile Flüssigkeit und als zweite Flüssigkeit eine hydrophobe Flüssigkeit ausgewählt. Mit anderen Worten wird somit bei dem erfindungsgemäßen Verfahren der für die Schmierung bzw. Kühlung verwendete Schmierstoff erst unmittelbar vor seiner Anwendung durch Vermischen der wasserhaltigen hydrophilen Flüssigkeit mit der hydrophoben Flüssigkeit hergestellt, so daß dementsprechend der so erstellte Schmierstoff unmittelbar danach auf das jeweils zu bearbeitende Werkstück geführt wird.

Bedingt dadurch, daß bei dem erfindungsgemäßen Verfahren der zur Schmierung bzw. Kühlung jeweils verwendete Schmierstoff erst unmittelbar vor seiner Anwendung durch Vermischen der beiden, den Schmierstoff bildenden Flüssigkeiten hergestellt wird, weist die Anwendung des erfindungsgemäßen Verfahrens den besonderen Vorteil auf, daß der Schmierstoff selbst nicht durch Zusatz von speziellen, zum Teil auch toxischen Substanzen lagerfähig gemacht bzw. stabilisiert werden muß, was beim Stand der Technik stets der Fall ist. Desweiteren kann in der Regel bei dem erfindungsgemäßen Verfahren auf den Zusatz von Emulgatoren völlig verzichtet oder zumindestens deren Konzentration erheblich reduziert werden, wobei derartige, in herkömmlichen Schmierstoffen immer enthaltenen Emulgatoren hautreizend, toxisch und/oder karzinogen sein können. Aufgrund des Fehlens dieser Emulgatoren ist das erfindungsgemäße Verfahren auch wesentlich umweltverträglicher als das herkömmliche Verfahren, bei dem fertig konfektionierte Schmierstoffe verwendet werden.

Darüber hinaus weist das erfindungsgemäße Verfahren noch weitere Vorteile auf. So ist festzuhalten, daß das erfindungsgemäße Verfahren wesentlich dazu beiträgt, die beim jeweiligen Anwender vorzuhaltende Anzahl von Schmierstoffen drastisch zu reduzieren, da durch Variation der Menge der beide Flüssigkeiten, die bei dem erfindungsgemäßen Verfahren zu dem anwendungsfertigen Schmierstoff vermischt werden, eine beliebige Anzahl von Schmierstoffen mit unterschiedlichen Eigenschaftsprofilen erstellt werden kann. Soll beispielsweise bei dem erfindungsgemäßen Verfahren eine besonders gute Kühlung oder ein besonders leichter Abtransport von Spänen oder Staub erreicht, so wird die Menge der ersten hydrophilen Flüssigkeit relativ zur Menge der zweiten hydrophoben Flüssigkeit erhöht, während bei einer erwünschten verbesserten Schmierung die Konzentration der hydrophoben Flüssigkeit relativ zur hydrophilen Flüssigkeit vergrößert wird. Desweiteren zeichnet sich der erst unmittelbar vor seiner Verwendung aus den beiden Flüssigkeiten hergestellte Schmierstoff dadurch vorteilhaft im Vergleich zu einem herkömmlichen Schmierstoff aus, daß der bei dem erfindungsgemäßen Verfahren erstellte Schmierstoff, wenn überhaupt, nur äußerst gering schäumt, so daß dementsprechend hiermit eine wesentlich bessere Schmierung sichergestellt ist. Bedingt durch die zuvor angesprochene Schaumarmut des erst unmittelbar vor seiner Anwendung hergestellten Schmierstoffes lassen sich bei dem erfindungsgemäßen Verfahren auch im Vergleich zum herkömmlichen Verfahren wesentlich höhere Drücke bei der Zuführung des flüssigen Schmierstoffes realisieren, was sich wiederum besonders vorteilhaft auf die Kühlung bzw. Schmierung bei der Be- und/oder Verarbeitung der Werkstücke auswirkt. Folglich kann somit bei dem erfindungsgemäßen Verfahren die Menge des zuzuführenden Schmierstoffes reduziert werden, wodurch eine besonders hohe Wirtschaftlichkeit des erfindungsgemäßen Verfahrens sichergestellt wird. Wegen der geringen Neigung zur Schaumbildung läßt sich der erst unmittelbar vor seiner Anwendung hergestellte Schmierstoff auch besser filtrieren, so daß die Aufbereitung der bei der Be- und/oder Verarbeitung der Werkstücke anfallenden Stäube und/oder Späne erheblich erleichtert wird. Darüber hinaus besitzt der beim erfindungsgemäßen Verfahren erstellte Schmierstoff wegen des Fehlens der Emulgatoren im Vergleich zu einem herkömmlichen Schmierstoff eine wesentlich verbesserte Hautfreundlichkeit. Insgesamt sind die vorstehend genannten Vorteile dahingehend zusammenzufassen, daß das erfindungsgemäße Verfahren eine erhöhte Prozeßsicherheit bietet, zur laufenden Kosteneinsparung wesentlich beiträgt, die Anzahl der bereitzustellenden Schmierstoffe reduziert und darüber hinaus noch eine bessere Umweltverträglichkeit besitzt.

Um bei dem erfindungsgemäßen Verfahren die intensive Vermischung der mindestens zwei, den Schmierstoff bildenden Flüssigkeiten unmittelbar vor Anwendung des Schmierstoffes sicherzustellen, bestehen mehrere bevorzugte Möglichkeiten. So können insbesondere die beiden Flüssigkeiten mittels einer von diesen Flüssigkeiten durchströmten Düse, in einem Hochleistungsmischer und/oder in einem Prallmischer miteinander vermischt werden.

Wird bei dem erfindungsgemäßen Verfahren zur Vermischung der mindestens zwei Flüssigkeiten als Mischer ein Hochleistungsmischer ausgewählt, so hat sich gezeigt, daß insbesondere bei Drehzahlen zwischen 1.000 Umdrehungen/Minute und 30.000 Umdrehungen/Minute, abhängig von der jeweiligen Zusammensetzung der beiden Flüssigkeiten, ein einwandfreies Vermischen sichergestellt wird.

Ebenso mit hervorragenden Ergebnissen kann bei dem erfindungsgemäßen Verfahren die intensive Vermischung der beiden Flüssigkeiten in einem Rotor-Stator-Mischer bei Drehzahlen zwischen 2.000 Umdrehungen/Minute und 26.000 Umdrehungen/Minute, insbesondere bei Drehzahlen zwischen 8.000 Umdrehungen/Minute und 24.000 Umdrehungen/Minute, herbeigeführt werden, wobei derartige Rotor-Stator-Mischer vorzugsweise die beiden miteinander zu vermischenden Flüssigkeiten durch den Rotor ansaugen, während das Gemisch dann seitlich aus dem Statorschlitzen austritt.

Bezüglich der Mischzeiten bei den zuvor beschriebenen Mischern ist bei dem erfindungsgemäßen Verfahren festzuhalten, daß diese abhängig von der Zusammensetzung der mindestens zwei Flüssigkeiten sowie der ausgewählten Drehzahlen vorzugsweise zwischen 0,1 Sekunden und 5 Minuten variiert.

Die Mischungstemperatur bei dem erfindungsgemäßen Verfahren liegt insbesondere zwischen Raumtemperatur (etwa 15 °C) und 80 °C, vorzugsweise zwischen 20 °C und 60 °C.

Abhängig von dem jeweiligen Bearbeitung- bzw. Verarbeitungsverfahren, den eingesetzten mindestens zwei Flüssigkeiten, aus denen der Schmierstoff unmittelbar vor seiner Anwendung erstellt wird, und dem jeweils zu verarbeitenden bzw. bearbeitenden Werkstück, richtet sich bei dem erfindungsgemäßen Verfahren die weitere Verwendung des Schmierstoffes nach erfolgter Kühlung bzw. Schmierung.

Insbesondere dann, wenn bei dem erfindungsgemäßen Verfahren der jeweils erstellte Schmierstoff eine relativ geringe Konzentration an hydrophober Flüssigkeit aufweist und wenn die hydrophile Flüssigkeit nahezu vollständig aus Wasser besteht, wird im einfachsten Fall der hierfür eingesetzte Schmierstoff nach der Be- bzw. Verarbeitung der Werkstücke aufgefangen und entsprechend entsorgt. Diese Variante des erfindungsgemäßen Verfahrens wird insbesondere auch dann angewendet, wenn die Menge an Schmierstoff relativ gering ist, so daß dementsprechend eine Auftrennung des Schmierstoffes nach seiner Verwendung wirtschaftlich nicht sinnvoll ist.

Bei einer weiteren Alternativ des erfindungsgemäßen Verfahrens wird der jeweils hergestellte Schmierstoff nach Be- und/oder Verarbeitung aufgefangen und bei der Be- und/oder Verarbeitung von weiteren Werkstücken, ggf. nach Zwischenlagerung, wieder verwendet. Mit anderen Worten wird somit bei dieser Variante des erfindungsgemäßen Verfahrens zunächst der Schmierstoff aus den mindestens zwei Flüssigkeiten (wasserhaltige hydrophile Flüssigkeit und hydrophobe Flüssigkeit) durch Vermischen derselben erstellt, hiernach wird das entsprechende Werkstück be- bzw. verarbeitet, der nach dieser Stufe anfallende Schmierstoff aufgefangen und für die erneute Ver- und Bearbeitung von weiteren Werkstücken wieder eingesetzt, so daß eine derartige Variante den einmal vermischten Schmierstoff im Kreislauf ständig wiederverwendet. Hier kann es erforderlich sein, daß vor der Wiederverwendung des Schmierstoffes die darin enthaltenen und von der Ver- bzw. Bearbeitung stammenden Partikel des Werkstückes, so z.B. Späne oder Stäube, mechanisch abgetrennt, insbesondere abfiltriert, werden.

Bei einer Weiterbildung der zuvor beschriebenen Variante des erfindungsgemäßen Verfahren wird der aufgefangene Schmierstoff vor seiner Wiederverwendung mit einer vorgegebenen Menge der ersten Flüssigkeit und/oder mit einer vorgegebenen Menge der zweiten Flüssigkeit nochmals vermischt. Diese Ausgestaltung des erfindungsgemäßen Verfahrens wird insbesondere immer dann angewendet, wenn bei der Ver- bzw. Bearbeitung des Werkstückes ein Inhaltsstoff in dem Schmierstoff, beispielsweise durch Verdampfen oder Verbrauchen, verlorengeht oder dessen Konzentration verarmt, so daß durch Zumischen der ersten Flüssigkeit und/oder zweiten Flüssigkeit zum Schmierstoff dieser Verlust wieder ausgeglichen wird. Selbstverständlich ist es jedoch auch bei dieser Variante möglich, nur einen Bestandteil bzw. mehrere Bestandteile der ersten Flüssigkeit bzw. der zweiten Flüssigkeit dem wiederverwendeten Schmierstoff zuzumischen, um die entsprechenden Verluste auszugleichen.

Bei einer dritten Variante des erfindungsgemäßen Verfahrens wird der verwendete Schmierstoff nach der Ver- bzw. Bearbeitung des Werkstückes aufgefangen und zumindestens teilweise wieder in die erste Flüssigkeit und/oder die zweite Flüssigkeit aufgetrennt. Vor und/oder nach dieser Auftrennung kann, sofern dies erforderlich ist, ein Abtrennen insbesondere ein Abfiltrieren der von dem jeweiligen bearbeiteten bzw. verarbeiteten Werkstück abgetragenen Partikel (Späne, Stäube) erfolgen. Somit wird bei dieser Variante des erfindungsgemäßen Verfahrens zunächst vor der Anwendung des Schmierstoffes dieser durch Vermischen der mindestens zwei Flüssigkeiten erstellt, hiernach das Werkstück mit dem so gemischten Schmierstoff be- bzw. verarbeitet und danach der Schmierstoff wieder in die beiden Flüssigkeiten aufgetrennt, so daß dementsprechend diese beiden Flüssigkeiten getrennt gelagert und insbesondere erneut wieder für die weitere Verwendung miteinander vermischt werden. Der besondere Vorteil dieser Verfahrensvariante liegt darin, daß hierbei vollständig auf Emulgatoren und Zusätze, die die Stabilität, insbesondere die Lager- bzw. Emulsionsstabilität, von konventionellen Schmierstoffen erhöhen, verzichtet werden kann. Auch läßt sich bei dieser Verfahrensvariante das Mischungsverhältnis der mindestens beiden Flüssigkeiten beliebig variieren und auf den jeweiligen Anwendungsfall optimieren, sofern festgestellt wird, daß bei der Ver- bzw. Bearbeitung des Werkstückes keine optimale Schmierung bzw. Kühlung erreicht wird.

Abhängig von der jeweiligen Zusammensetzung der beiden den Schmierstoff durch Vermischung bildenden Flüssigkeiten sowie deren Konzentrationen sieht eine Weiterbildung der zuvor beschriebenen Ausführungsform des erfindungsgemäßen Verfahrens vor, daß hierbei zur Auftrennung des verwendeten Schmierstoffes dieser in einen Ruhetank geleitet wird. Hier findet dann nach einer Verweilzeit zwischen 1 Minute und 10 Stunden und einer Verweiltemperatur zwischen Raumtemperatur und 80 °C eine Auftrennung des verwendeten Schmierstoffes in die erste Flüssigkeit und die zweite Flüssigkeit aufgrund der unterschiedlichen Dichten statt, so daß dementsprechend auf unterschiedlichen Höhen die erste Flüssigkeit von der zweiten Flüssigkeit abgezogen werden kann.

Erfolgt bei dem erfindungsgemäßen Verfahren die Auftrennung des Schmierstoffes in die beiden Flüssigkeiten nicht zwangsläufig in dem Ruhetank oder steht die dafür erforderliche Zeit nicht zur Verfügung, so sieht eine andere Ausführungsform des erfindungsgemäßen Verfahrens vor, daß hierbei der aufgefangene Schmierstoff zur Abtrennung der ersten Flüssigkeit von der zweiten Flüssigkeit einem Separator zugeführt wird.

Insbesondere dann, wenn in dem Separator die erste Flüssigkeit von der zweiten Flüssigkeit abzentrifugiert wird, lassen sich auch bei komplex aufgebauten Schmierstoffen diese wieder in die erste und zweite Flüssigkeit auftrennen. Insbesondere wird bei diesem Abzentrifugieren eine Drehzahl zwischen 500 Umdrehungen/Minute und 50.000 Umdrehungen/Minute, vorzugsweise zwischen 5.000 Umdrehungen/Minute und 20.000 Umdrehungen/Minute, eine Zentrifugalzeit zwischen 1 Sekunde und 5 Minuten und eine Temperatur zwischen 20 °C und 80 °C, vorzugsweise zwischen 20 °C und 60 °C, ausgewählt, wobei die konkreten Parameter beim Abzentrifugieren danach ausgerichtet werden, welche Bestandteile in welcher Konzentration in dem aufgefangen Schmierstoff vorliegen.

Abhängig von den aufgetrennten Inhaltsstoffen des verwendeten und wieder aufgefangenen Schmierstoffes richtet sich die Weiterbehandlung der beiden aufgetrennten Flüssigkeiten. So kann beispielsweise eine aufgetrennte Flüssigkeit, wenn sie stark mit vom Werkstück stammenden Partikeln, so z.B. Spänen oder Stäube, beladen ist, entsorgt werden. Besonders vorteilhaft ist es jedoch, wenn die auftrennten Flüssigkeiten, ggf. nach Lagerung, wieder miteinander vermischt werden, so daß sie als Schmierstoff bei der Be- bzw. Verarbeitung von weiteren Werkstücken weiterverwendet werden.

Wie bereits eingangs beim erfindungsgemäßen Verfahren beschrieben ist, ist ein besonderer Vorteil des erfindungsgemäßen Verfahrens darin zu sehen, daß die erste Flüssigkeit mit der zweiten Flüssigkeit in einem vorgegebenen Mengenverhältnis miteinander vermischt wird, um so die Eigenschaften des dann erstellten Schmierstoffes zu variieren.

Grundsätzlich richtet sich beim erfindungsgemäßen Verfahren das vorgegebene Mengenverhältnis von der ersten Flüssigkeit zur zweiten Flüssigkeit nach der jeweiligen Zusammensetzung der beiden Flüssigkeiten sowie den erstrebten Eigenschaften des so erstellten Schmierstoffes. Vorzugsweise variiert das Mengenverhältnis der ersten Flüssigkeit zur zweiten Flüssigkeit zwischen 99,9 Gew.% : 0,1 Gew.% und 0,1 Gew.% : 99,9 Gew.%. Besonders gute Kühlungen und Schmierungen lassen sich bei dem erfindungsgemäßen Verfahren dann erreichen, wenn das Mengenverhältnis der ersten Flüssigkeit zur zweiten Flüssigkeit zwischen 97 Gew.% : 3 Gew.% und 40 Gew.% : 60 Gew.% liegt.

Vorstehend ist wiederholt dargelegt worden, daß bei dem erfindungsgemäßen Verfahren eine erste Flüssigkeit mit einer zweiten Flüssigkeit zur Erstellung des Schmierstoffes unmittelbar vor dessen Anwendung vermischt wird. Hierbei soll der Begriff "erste Flüssigkeit" und der Begriff "zweite Flüssigkeit" nicht nur jeweils eine einzige Flüssigkeit sondern auch eine Vielzahl von Flüssigkeiten, insbesondere zwei bis sechs separat gehaltene Flüssigkeiten abdecken, so daß dementsprechend diese Vielzahl der Flüssigkeiten zur Erstellung des Schmierstoffes miteinander vermischt wird.

Besonders geeignet ist es, wenn bei dem erfindungsgemäßen Verfahren als erste Flüssigkeit eine solche Flüssigkeit ausgewählt wird, die außer Wasser noch möglicherweise andere Bestandteile aufweist. Hierbei können diese Bestandteile aus der Gruppe, bestehend aus mindestens einen Glykolderivat, insbesondere einem Polyethylenglykol, mindestens einem EP-Additiv, mindestens einem Korrosionsschutzmittel, mindestens einem Bakterizid, mindestens einem Fungizid, mindestens einem Bakterostatikum und/oder mindestens einem Alkalispender ausgewählt werden, wobei Wasser allein, Wasser mit einem der zuvor genannten Bestandteilen oder auch Wasser mit einer beliebigen Anzahl der zuvor genannten Bestandteilen mit ausgezeichnetem Ergebnis bei dem erfindungsgemäßen Verfahren eingesetzt werden kann.

Bezüglich der Konzentrationen der vorstehend genannten Bestandteile, die in der ersten Flüssigkeit insbesondere vorhanden sind oder vorhanden sein können, ist festzuhalten, daß die erste Flüssigkeit vorzugsweise neben Wasser in einer Konzentration zwischen 100 Gew.% und 40 Gew.% noch das Bakterostatikum in einer Konzentration zwischen 0 Gew.% und 60 Gew.%, das EP-Additiv in einer Konzentration zwischen 0 Gew.% und 60 Gew.%, das Korrosionsschutzmittel in einer Konzentration zwischen 0 Gew.% und 60 Gew.%, das Bakterizid in einer Konzentration zwischen 0 Gew.% und 60 Gew.%, das Fungizid in einer Konzentration zwischen 0 Gew.% und 60 Gew.% und/oder den Alkalispender, insbesondere ein Alkalihydroxid, in einer Konzentration zwischen 0 Gew.% und 60 Gew.% enthält.

Hierbei werden im Rahmen der vorliegenden Anmeldung unter dem Begriff Bakterostatikum solche Verbindungen verstanden, die die Stabilisierung der jeweiligen Flüssigkeit, in der sie enthalten sind, bewirkt, wobei eine bevorzugte Verbindungsklasse in der vorangemeldeten und noch nicht veröffentlichten deutschen Patentanmeldung 197 52 370 beschrieben ist. Desweiteren fällt hierunter auch Borsäure und ihre Salze. Als EP-Additiv wird ein solches Additiv bezeichnet, das zur Erhöhung der Schneidleistung bei schweren Zerspanungsoperationen angewendet wird, wobei es sich dabei vorzugsweise um Schwefel- und Phosphoradditive handelt. Korrosionsschutzmittel dienen zur Verstärkung des Korrosionsschutzes für Maschinen und Werkstücke und stellen chemisch insbesondere Alkaliseifen, Alkanolaminseifen, Petroleumsulfonate, Alkanolamide, alkoxylierter Alkyl-/Aryl-Phosphorsäureester, organische Borverbindungen, Alkali- bzw. Ammoniumsalze von Amidocarbonsäuren, Thiophosphorsäureester und deren Salze, Alkylbernsteinsäurederivate und/oder Alkylimidazole dar. Bakterizide/Bakteriostatika und Fungizide/Fungistatika reduzieren bzw. hemmen den mikrobiellen Befall bzw. Wachstum, hervorgerufen durch Bakterien, Hefen und Pilze. Hierbei handelt es sich insbesondere um solche Produkte, wie sie in der DE 197 52 370 beansprucht werden. Ferner fallen unter die Gruppe der Biozide solche Verbindungen, die Formaldehyd abspalten oder bei denen es sich um N- und/oder S-haltige Heterocyklen handelt. Ferner sind hier noch Alkoholderivate zu benennen.

Um bei dem erfindungsgemäßen Verfahren ein einwandfreies und reproduzierbares Vermischen der ersten Flüssigkeit mit der zweiten Flüssigkeit besonders vorteilhaft zu gestalten, sieht eine weitere Ausführungsform des erfindungsgemäßen Verfahrens vor, daß als zweite Flüssigkeit eine solche hydrophobe Flüssigkeit ausgewählt wird, die eine Viskosität bei 40 °C zwischen 2 mm²/s und 1.500 mm²/s, insbesondere eine Viskosität bei 40 °C zwischen 10 mm²/s und 100 mm²/s, aufweist.

Bezüglich der Vermischungen und insbesondere auch bezüglich der Abtrennung nach Verwendung des Schmierstoffes wird bei einer Weiterbildung des erfindungsgemäßen Verfahrens als zweite Flüssigkeit eine solche hydrophobe Flüssigkeit ausgewählt, deren Dichte bei 15 °C zwischen 800 kg/m³ und 950 kg/m³, insbesondere zwischen 830 kg/m³ und 910 kg/m³, variiert.

Insbesondere wird bei dem erfindungsgemäßen Verfahren als zweite Flüssigkeit eine solche hydrophobe Flüssigkeit ausgewählt, die eine lipophile Komponente in einer Konzentration zwischen 20 Gew.% und 100 Gew.%, vorzugsweise zwischen 65 Gew.% und 99,5 Gew.%, aufweist. Hier hat sich gezeigt, daß eine derartige bevorzugte zweite hydrophobe Flüssigkeit in den vorstehend genannten Mengenverhältnissen mit der ersten, hydrophilen Flüssigkeit auch ohne Zusatz von Emulgatoren vermischt werden kann, wobei die anschließende Auftrennung eines hieraus gemischten Schmierstoffes besonders problemlos verläuft.

Bezüglich des chemischen Aufbaus der lipophilen Komponente, die in der zweiten Flüssigkeit vorhanden ist, ist grundsätzlich festzuhalten, daß hier jede lipophile Komponente geeignet ist, die eine hinreichende Schmierung und/oder Kühlung bei der Be- bzw. Verarbeitung des Werkstückes sicherstellt. Insbesondere wird als lipophile Komponente mindestens ein höherer Kohlenwasserstoff, ein Mineralöl, mindestens ein Fettsäureester, mindestens ein Glykol, mindestens ein Polyglykol und/oder mindestens ein Fettalkohol ausgewählt, wobei es sich dabei insbesondere um naphthenbasische Mineralöle, paraffinbasische Mineralöle, aromatische Mineralöle, Weißöle, Poly[α]olefine, geschwefelte Kohlenwasserstoffe, Chlorparaffine, native Ester, vorzugsweise pflanzliche und/oder tierische Triglyceride, synthetische Fettsäureester, insbesondere Mono- und/oder Dicarbonsäureester, synthetische Polycarbonsäureester, synthetische Polyester, synthetische Komplexester und/oder synthetische Triglyceride, vorzugsweise mittelkettige Triglyceride, geschwefelte native und/oder synthetische Ester handelt. Hierzu zählen desweiteren Rüböl, modifiziertes Rüböl, Rizinusöl, Rizinusölderivate, Trimethylolpropansäureester, Ethylenglykole, Propylenglykole, Polyethylenglykole, Aminethoxylate und/oder Polyaminethoxylate. Bevorzugte Fettalkohole stellen Cetylalkohol, Oleylalkohol sowie Guebert-Alkohole (α'-verzweigte Alkohole) dar, wobei insbesondere Oleylalkohol mit einer Jodzahl zwischen 90 und 95 in der zweiten Flüssigkeit als lipophile Komponente enthalten ist.

Klarstellend sei angemerkt, daß die zuvor aufgeführten einzelnen lipophilen Bestandteile sowohl einzeln als auch in einer beliebigen Mischung untereinander in der zweiten Flüssigkeit enthalten sein können.

Wie bereits vorstehend bei der ersten Flüssigkeit beschrieben ist, kann die zweite Flüssigkeit mit weiteren Zusätzen versetzt sein, wobei es sich hierbei noch um mindestens ein Antioxidans, mindestens ein Stabilisator, mindestens ein EP-Additiv, mindestens ein Korrosionsschutzmittel, mindestens ein AN-Zusatz, mindestens einen Entschäumer und/oder mindestens ein Fungizid handelt. Hierbei weisen diese zuvor angesprochenen Zusätze den chemischen Aufbau auf, wie dieser vorstehend bei der ersten Flüssigkeit bereits beschrieben ist.

Insbesondere dann, wenn als zweite Flüssigkeit eine solche Flüssigkeit ausgewählt wird, die das naphthenbasische Öl in einer Konzentration zwischen 0 Gew.% und 100 Gew.%, das paraffinbasische Öl in einer Konzentration zwischen 0 Gew.% und 100 Gew.%, den nativen Ester in einer Konzentration zwischen 0 Gew.% und 100 Gew.%, den synthetischen Ester in einer Konzentration zwischen 0 Gew.% und 100 Gew.%, das Antioxidans in einer Konzentration zwischen 0 Gew.% und 3 Gew.%, den Stabilisator in einer Konzentration zwischen 0 Gew.% und 15 Gew.%, das EP-Additiv in einer Konzentration zwischen 0 Gew.% und 20 Gew.%, das Korrosionsschutzmittel in einer Konzentration zwischen 0 Gew.% und 12 Gew.%, den AN-Zusatz (Antinebelzusatz) in einer Konzentration zwischen 0 Gew.% und 3 Gew.%, den Entschäumer in einer Konzentration zwischen 0 Gew.% und 1 Gew.%, und/oder das Fungizid in einer Konzentration zwischen 0 Gew.% und 2 Gew.% umfaßt, weist eine derartige zweite Flüssigkeit im besonderen Maße die Vorteile auf, wie sie vorstehend beim erfindungsgemäßen Verfahren beschrieben sind. Auch läßt sich eine derartige zweite Flüssigkeit nach dem Bearbeiten bzw. Verarbeiten des Werkstückes hervorragend von der ersten Flüssigkeit abtrennen, so daß dementsprechend das erfindungsgemäße Verfahren mit einer derartigen zweiten Flüssigkeit besonders wirtschaftlich gestaltet werden kann.

Um die zuvor beschriebene Auftrennung der beiden Flüssigkeiten weiter zu erleichtern, sieht eine besonders vorteilhafte Weiterbildung des erfindungsgemäßen Verfahrens vor, daß mindestens eine der beiden Flüssigkeiten mindestens ein Demulgator zugesetzt ist. Hierbei bewirkt dieser Demulgator, daß die Auftrennung der vor der Be- bzw. Verarbeitung des Werkstückes vermischten Flüssigkeiten nach erfolgter Anwendung besonders erleichtert wird, wobei dieser Demulgator wahlweise der ersten Flüssigkeit, der zweiten Flüssigkeit oder beiden Flüssigkeiten zugesetzt wird.

Eine weitere, besonders vorteilhafte Ausgestaltung der zuvor beschriebenen Ausführungsform des erfindungsgemäßen Verfahrens sieht vor, daß ein Demulgator verwendet wird, der durch die nachfolgende Formel (1) wiedergegeben ist.

CH₃-CH₂-CH₂-CH₂-0-(EO)ₓ (PO)_{y}-H (Formel 1)

In Formel (1) bedeutet (EO) ein Ethylenoxid-Rest der Summenformel C₂H₄O, (PO) ein Propylenoxid-Rest der Summenformel C₃H₆O, x eine ganze Zahl zwischen 0 und 150 und y eine ganze Zahl zwischen 0 und 150 bedeuten, gleichzeitig jedoch x und y nicht 0 sind. Vorteilhafterweise wird diese Verbindung dann insbesondere vor dem Vermischen der ersten Flüssigkeit mit der zweiten Flüssigkeit der ersten Flüssigkeit zugesetzt.

Die Konzentration des zuvor beschriebenen und in de Formel (1) wiedergegebenen Demulgators richtet sich danach, wie die erste Flüssigkeit und zweite Flüssigkeit chemisch aufgebaut ist, in welchem Mengenverhältnis die erste und zweite Flüssigkeit zueinander stehen und welche Auftrennzeiten bei dem erfindungsgemäßen Verfahren erwünscht sind. Vorteilhafterweise hat sich gezeigt, daß bei einer Konzentration des Demulgators in der ersten Flüssigkeit zwischen 0,001 Gew.% und 10 Gew.% eine hervorragende Auftrennung des aus der ersten Flüssigkeit und zweiten Flüssigkeit vermischten Schmierstoffes nach dessen Anwendung in die erste und zweite Flüssigkeit ermöglicht, ohne daß es dabei bei dem erfindungsgemäßen Verfahren erforderlich wird, zusätzlich aufwendige Trennverfahren durchzuführen.

Bei einer anderen Ausführungsform des erfindungsgemäßen Verfahrens wird der zweiten Flüssigkeit mindestens ein Demulgator zugesetzt. Hierbei wird insbesondere ein solcher Demulgator ausgewählt, der chemisch gesehen ein Alkali- und/oder Erdalkalisalz einer organischen Sulfonsäure darstellt.

Besonders gute Trennergebnisse lassen sich mit einem Demulgator erzielen, der der zweiten Flüssigkeit zugesetzt wird und der durch die nachfolgende Formel (2) wiedergegeben wird.

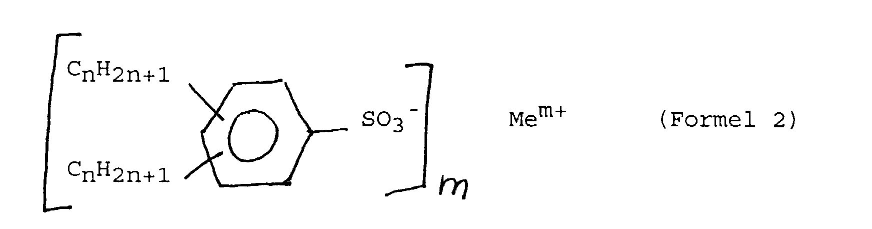

In der Formel (2) bedeuten n eine ganze Zahl zwischen 0 und 12, m 1 oder 2 und Me ein Metall, insbesondere ein Alkali- oder Erdalkalimetall.

Selbstverständlich ist es ebenso möglich, bei dem erfindungsgemäßen Verfahren sowohl der ersten Flüssigkeit als auch der zweiten Flüssigkeit jeweils mindestens einen Demulgator zuzusetzen, wobei hierbei vorzugsweise für die erste Flüssigkeit ein Demulgator auf der Basis der vorstehend wiedergegebenen Formel (1) und für die zweite Flüssigkeit ein Demulgator auf der Basis der vorstehend wiedergegebenen Formel (2) ausgewählt werden.

Bei einer anderen Ausführungsform des erfindungsgemäßen Verfahrens wird zusätzlich zu dem aus den mindestens beiden Flüssigkeiten erstellten Schmierstoff das zu be- bzw. zu verarbeitete Werkstück mit einem weiteren Fluid beaufschlagt.

Insbesondere dann, wenn bei der Be- bzw. Verarbeitung des Werkstückes eine hohe Staubkonzentration oder eine hohe Konzentration an Spänen anfällt, bietet es sich an, die zuvor beschriebene Variante des erfindungsgemäßen Verfahrens auszuwählen, wobei dann insbesondere als weiteres Fluid eine Flüssigkeit, so z.B. Wasser, und vorzugsweise die erste Flüssigkeit ausgewählt wird.

Ebenso ist es möglich, bei dem erfindungsgemäßen Verfahren das jeweils zu be- bzw. verarbeitende Werkstück zusätzlich zu den aus den beiden Flüssigkeiten gemischten Schmierstoff mit Luft als weiteres Fluid zu beaufschlagen, wobei diese Variante des erfindungsgemäßen Verfahrens vorzugsweise dann ausgewählt wird, wenn ebenfalls eine hohe Konzentration an Abrieb (Staub, Späne) am be- bzw. verarbeiteten Werkstück anfällt oder wenn bewußt eine Minimalmengenschmierung bzw. Minimalmengenkühlung erwünscht und technisch geboten ist.

Stellt der jeweilige Anwender beispielsweise während der Anwendung des erfindungsgemäßen Verfahrens fest, daß der eingesetzte Schmierstoff, der aus den beiden Flüssigkeiten unmittelbar vor seiner Anwendung durch Vermischen erstellt wird, bezüglich seiner Schmierwirkung und/oder seiner Kühlwirkung nicht ausreicht, so bietet es sich an, daß dem aus den beiden Flüssigkeiten erstellte Schmierstoff zusätzlich noch die erste oder zweite Flüssigkeit separat zugesetzt wird. Mit anderen Worten ermöglicht diese Variante des erfindungsgemäßen Verfahrens, daß der jeweilige Anwender bei sich abzeichnenden Störungen oder drohenden Unterbrechungen der Be- bzw. Verarbeitung des Werkstückes jederzeit die Möglichkeit hat, sofort dadurch zu reagieren, daß er abhängig von den Erfordernissen wahlweise die erste Flüssigkeit oder die zweite Flüssigkeit separat dem Schmierstoff zusetzt.

Vorteilhafte Weiterbildungen des erfindungsgemäßen Verfahrens sind in den Unteransprüchen angegeben.

Das erfindungsgemäße Verfahren wird nachfolgend anhand von Ausführungsformen näher erläutert. Es zeigen:
- Figur 1: ein Fließschema einer ersten Ausführungsform;
- Figur 2: ein Fließschema einer zweiten Ausführungsform; und
- Figur 3: ein Fließschema einer dritten Ausführungsform des zuvor beschriebenen Verfahrens.

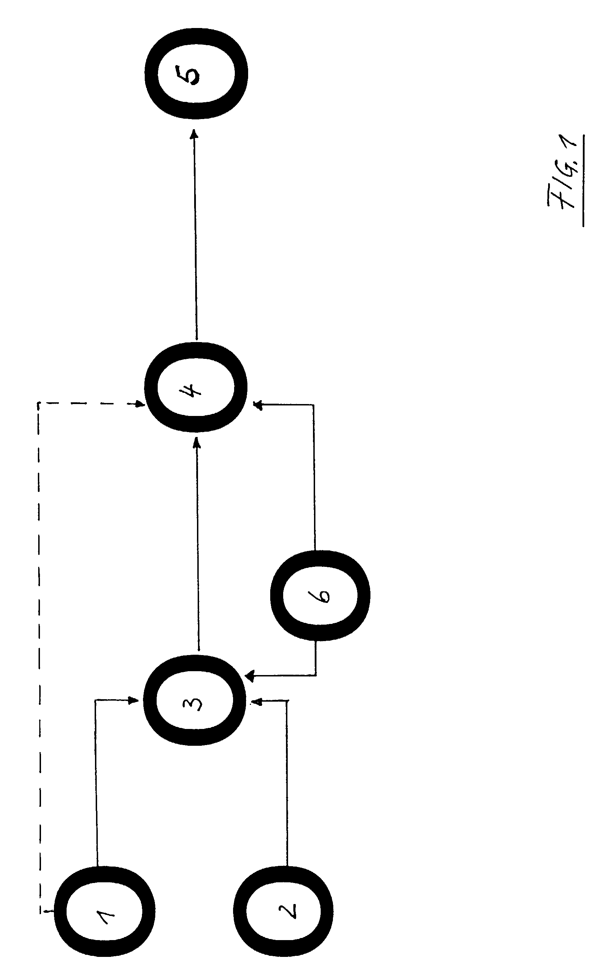

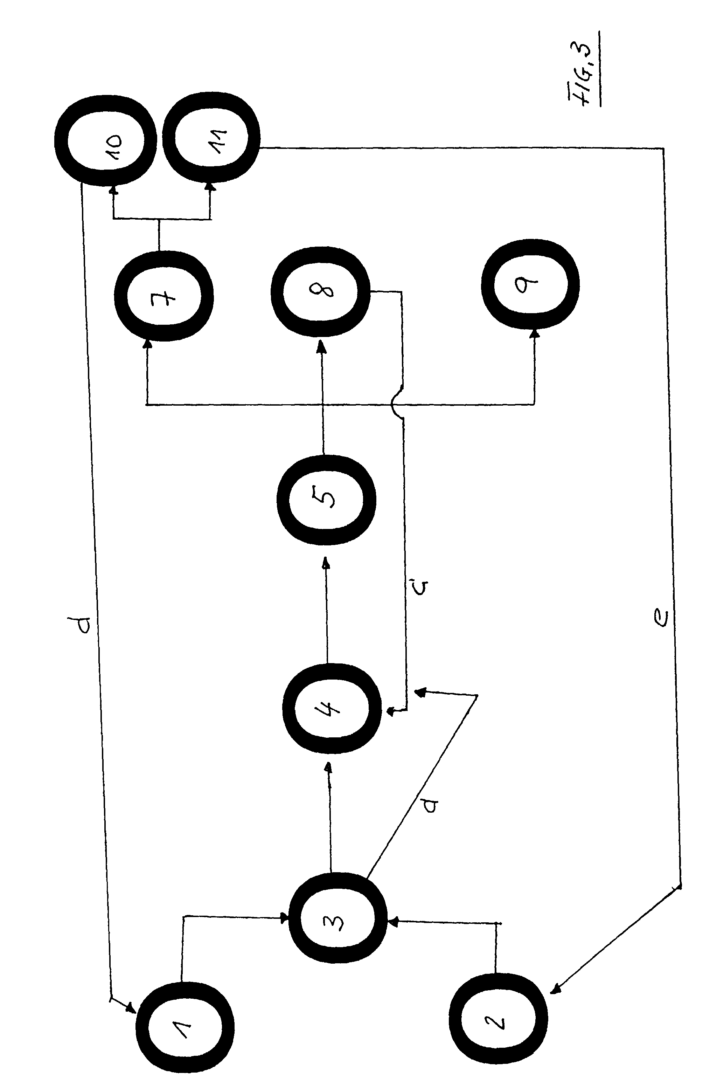

In den Figuren 1 und 3 sind dieselben Bearbeitungsschritte mit denselben Bezugsziffern versehen.

In der Figur 1 bedeutet 1 einen Vorrat einer ersten Flüssigkeit, wobei diese erste Flüssigkeit eine wasserhaltige hydrophile Flüssigkeit darstellt. Mit 2 ist ein Vorrat für eine zweite, hydrophobe Flüssigkeit bezeichnet, wobei die erste hydrophile Flüssigkeit 1 mit der zweiten hydrophoben Flüssigkeit 2 an 3 intensiv vermischt wird, so daß dementsprechend der hieraus erstellte Schmierstoff zur Kühlung bzw. Schmierung bei 4 ver- bzw. bearbeiteten Werkstückes abgegeben wird.

Nach der Bearbeitung des Werkstückes wird der Schmierstoff in Pfeilrichtung von 4 nach 5 transportiert, wobei der Schmierstoff dann bei 5 aufgefangen und ggf. entsorgt wird.

Desweiteren ist bei dem in Figur 1 gezeigten Fließschema an der mit 6 bezeichneten Stelle ein Hilfsfluid vorgesehen, wobei das Hilfsfluid 6 wahlweise (linker Pfeil) der Vermischung der beiden Flüssigkeiten oder dem Be- bzw. Verarbeiten des Werkstückes bei 4 (rechter Pfeil) zugeführt wird. Bei diesem Hilfsfluid 6 kann es sich entweder um eine Flüssigkeit oder um Luft handeln, wobei die Flüssigkeit bzw. Luft dann zur zusätzlichen Kühlung und zur Verringerung der Schmierstoffmenge dient.

Durch den gestrichelten Pfeil in Figur 1 wird angedeutet, daß desweiteren die Möglichkeit besteht, die erste Flüssigkeit separat von dem vermischten Schmierstoff zur Be- bzw. Verarbeitungsstelle 4 des Werkstückes zu leiten, um hierdurch eine zusätzliche Kühlung/Schmierung oder ein Abtransport von Staub bzw. Spänen zusätzlich zu bewirken.

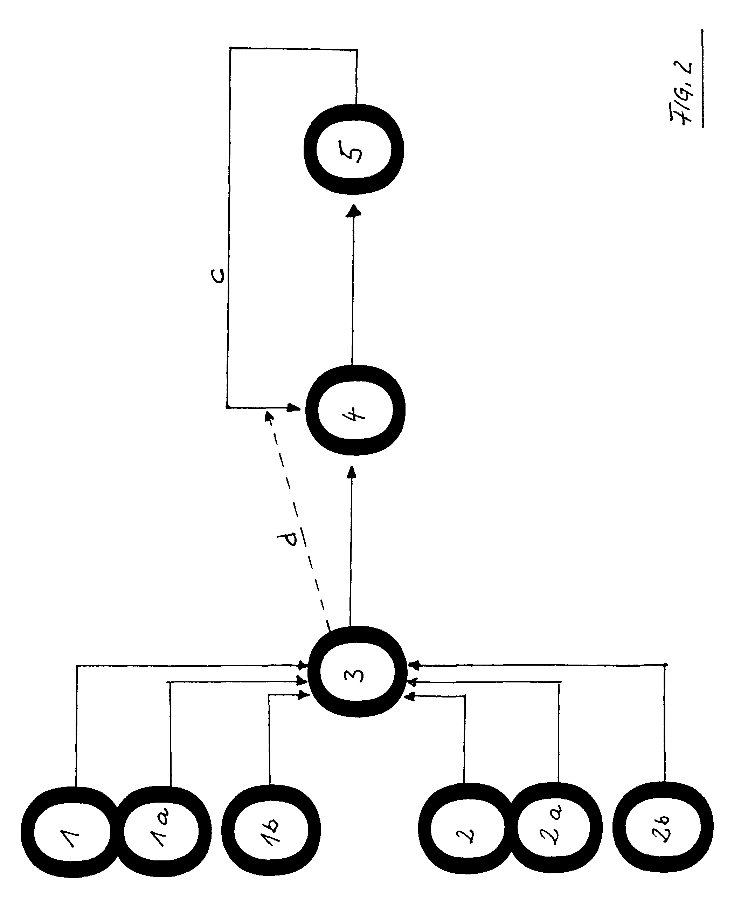

Das in Figur 2 abgebildete Fließschema des erfindungsgemäßen Verfahrens unterscheidet sich von dem Fließschema gemäß Figur 1 dahingehend, daß bei dem Fließschema gemäß Figur 2 nicht nur eine einzige erste Flüssigkeit 1 mit einer einzigen zweiten Flüssigkeit 2, sondern drei beispielhaft gezeigte erste Flüssigkeiten 1, 1 a und 1 b mit drei beispielhaft gezeigten zweiten Flüssigkeiten 2, 2a und 2 b an der mit 3 bezeichneten Stelle miteinander vermischt werden. Der hieraus resultierende Schmierstoff wird dann zur Kühlung bzw. Schmierung eines an der Stelle 4 bearbeiteten bzw. verarbeiteten Werkstückes geleitet, wobei der Schmierstoff dann bei 5 aufgefangen und ggf. entsorgt wird. Desweiteren ist bei dem Fließschema in Figur 2 im Unterschied zu dem zuvor beschriebenen Fließschema gemäß Figur 1 das Hilfsfluid 6 nicht eingezeichnet, wobei jedoch hier bei dem Fließschema gemäß Figur 2 identisch das gilt, was vorstehend bei dem Fließschema gemäß Figur 1 als Optionen beschrieben ist.

Anstelle der Entsorgung kann jedoch der bei 5 aufgefangene Schmierstoff vorteilhafterweise wieder zur Ver- bzw. Bearbeitung des Werkstückes wiederverwendet werden, wie dies durch den Pfeil c in Figur 2 eingezeichnet ist. Tritt jedoch eine Verringerung der Schmierstoffmenge bei der Wiederverwendung auf, so kann zusätzlicher Schmierstoff durch Vermischen der Flüssigkeiten 1 bis 1 b mit den Flüssigkeiten 2 bis 2 b bei 3 erstellt werden, so daß dieser frisch erstellte Schmierstoff dann über den mit d bezeichneten Pfeil (gestrichelt) dem Wiederverwendungskreislauf zugeführt wird.

Bei dem in Figur 3 gezeigten Fließschema des Verfahrens wird eine erste Flüssigkeit 1 mit einer zweiten Flüssigkeit 2 bei 3 unter Erstellung des Schmierstoffes vermischt. Dieser unmittelbar vor seiner Anwendung erstellte Schmierstoff wird dann zur Be- bzw. Verarbeitung des Werkstückes bei 4 verwendet. Hiernach wird der Schmierstoff bei 5 aufgefangen und bei einer ersten Alternative in einem Zwischentank 8 gelagert, so daß er hieraus wieder zu 4 zurückgeführt wird, wie dies durch den Pfeil c angedeutet ist. Sollte im Laufe der Bearbeitung eine Verringerung der Schmierstoffmenge auftreten, kann frischer Schmierstoff durch Vermischen der beiden Flüssigkeiten 1 und 2 bei 3 erstellt und dem Wiederverwendungskreislauf zugeführt werden, wie dies im Fließschema durch den Pfeil d angedeutet ist.

Bei einer zweiten Alternative wird der bei 5 aufgefangene Schmierstoff nach seiner Anwendung in einem Tank 9 gesammelt und dort ungetrennt entsorgt.

Bei einer dritten Alternative wird der bei 5 aufgefangene Schmierstoff bei 7 wieder in die erste Flüssigkeit, wie dies durch die Bezugsziffer 10 angedeutet wird und in die zweite Flüssigkeit, wie dies durch die Bezugsziffer 11 angedeutet wird, aufgetrennt und separat zum Vorrat der ersten Flüssigkeit 1 und zum Vorrat der zweiten Flüssigkeit 2 zurückgeführt, wie dies für die erste Flüssigkeit durch den Pfeil d und für die zweite Flüssigkeit durch den Pfeil e im Fließschema gemäß der Figur 3 gekennzeichnet ist.

### Ausführungsbeispiel

Es wurden verschieden aufgebaute erste Flüssigkeiten, die nachfolgend von W1 bis W6 bezeichnet sind, erstellt, wobei diese unterschiedlich aufgebauten ersten Flüssigkeiten die folgenden Inhaltsstoffe aufwiesen:

### Zusammensetzung von sechs ersten Flüssigkeiten, bezeichnet mit W1 bis W6

**Tabelle 1**

| Komponenten | W1 | W2 | W3 | W4 | W5 | W6 |
|---|---|---|---|---|---|---|
| Wasser | 100 | 63,0 | 55,5 | 57,5 | 57,5 | 52,5 |
| Borsäure | - | 5, 0 | 5,0 | 8,0 | - | 7,0 |
| Stabilisator | - | 5,0 | 5,0 | - | 10,0 | 5,0 |
| EP-Additiv | - | 3,0 | 3,0 | 3,0 | 3,0 | 3,0 |
| KOH 45 % | - | 13,0 | 13,0 | 14,0 | 11,5 | - |
| Korrosionsschutz | - | 9,0 | 9,0 | 8,0 | 8,5 | 9,0 |
| Bakterizid | - | 1,0 | 1,0 | 1,0 | 1,0 | - |
| Fungizid | - | 0,2 | 0,2 | 0,2 | 0,2 | 0,2 |
| Sonstiges | - | 0,8 | 0,8 | 0,8 | 0,8 | 0,8 |
| Demulgator gemäß Formel (1) | - | - | 7,5 | 7,5 | 7,5 | 7,5 |
| MEA/TEA | | | | | | 15,0 |
| MEA = Monoethanolamin TEA = Triethanolamin | | | | | | |

Desweiteren wurden 20 unterschiedlich aufgebaute zweite Flüssigkeiten (hydrophobe Flüssigkeit) erstellt, deren Aufbau in der nachfolgenden Tabelle 2 wiedergegeben ist.

### Zusammensetzung von zwanzig zweiten Flüssigkeiten, bezeichnet mit N1 bis N20

**Tabelle 2 a**

| Komponenten | N1 | N2 | N3 | N4 | N5 | N6 | N7 | N8 | N9 | N10 |
|---|---|---|---|---|---|---|---|---|---|---|
| paraffinbasisches Öl | 99,4 | | | | | | 32 | 32 | 32 | 32 |
| | | | | | | | | | | |
| naphthenbasisches Öl | | | | | | | | | | |
| | | | | | | | | | | |
| A | | 99,4 | | | | | 67,4 | | | |
| | | | | | | | | | | |
| B | | | 99,4 | | | | | 67,4 | | 62,4 |
| | | | | | | | | | | |
| C | | | | 99,4 | | | | | 67,4 | |
| | | | | | | | | | | |
| nativer Ester | | | | | 99,4 | | | | | |
| | | | | | | | | | | |
| synthetische Ester | | | | | | 99,4 | | | | |
| | | | | | | | | | | |
| Antioxidans | 0,4 | 0,4 | 0,4 | 0,4 | 0,4 | 0,4 | 0,4 | 0,4 | 0,4 | 0,4 |
| | | | | | | | | | | |
| Stabilisator | | | | | | | | | | 5 |
| | | | | | | | | | | |
| EP-Additiv | | | | | | | | | | |
| | | | | | | | | | | |
| Korrosionsschutz | | | | | | | | | | |
| | | | | | | | | | | |
| AN-Zusatz | | | | | | | | | | |
| | | | | | | | | | | |
| Entschäumer | | | | | | | | | | |
| | | | | | | | | | | |
| Demulgator auf Basis Formel (2) als Kalziumsulfonat | 0,2 | 0,2 | 0,2 | 0,2 | 0,2 | 0,2 | 0,2 | 0,2 | 0,2 | 0,2 |

**Tabelle 2 b**

| Komponenten | N11 | N12 | N13 | N14 | N15 | N16 | N17 | N18 | N19 | N20 |
|---|---|---|---|---|---|---|---|---|---|---|
| paraffinbasisches Öl | 32 | 32 | | | | 31,8 | 30,8 | | | 30,8 |
| | | | | | | | | | | |
| naphthenbasisches Öl | | | | | | | | | | |
| | | | | | | | | | | |
| A | | | | | | | | | | |
| | | | | | | | | | | |
| B | 57,4 | 52,6 | | | | 50,0 | 49,0 | | | 40,0 |
| | | | | | | | | | | |
| C | | | | | | | | | | |
| | | | | | | | | | | |
| nativer Ester | | | | | | | | | | |
| | | | | | | | | | | |
| synthetische Ester | | | 94,4 | 89,4 | 84,4 | | | 81,8 | 79,8 | 10 |
| | | | | | | | | | | |
| Antioxidans | 0,4 | 0,4 | 0,4 | 0,4 | 0,4 | 0,4 | 0,4 | 0,4 | 0,4 | 0,4 |
| | | | | | | | | | | |
| Stabilisator | 10 | 15 | 5 | 10 | 15 | 15 | 16 | 15 | 15 | 15 |
| | | | | | | | | | | |
| EP-Additiv | | | | | | 1,0 | 3,0 | 1,0 | 3, 0 | 2,0 |
| | | | | | | | | | | |
| Korrosionsschutz | | | | | | 0,5 | 0,5 | 0,5 | 0,5 | 0,5 |
| | | | | | | | | | | |
| AN-Zusatz | | | | | | 1,0 | 1,0 | 1,0 | 1,0 | 1,0 |
| | | | | | | | | | | |
| Entschäumer | | | | | | 0,1 | 0,1 | 0,1 | 0,1 | 0,1 |
| | | | | | | | | | | |
| Demulgator auf Basis Formel (2) als Kalziumsulfonat | 0,2 | 0,2 | 0,2 | 0,2 | 0,2 | 0,2 | 0,2 | 0,2 | 0,2 | 0,2 |

Zu den zuvor angegebenen quantitativen Angaben in den Tabellen 1 und 2 sowie den folgenden Tabellen ist anzumerken, daß es sich hierbei stets um Gew.% handelt.

### Nachweis der Schmierfähigkeit

Zum Nachweis der Schmierfähigkeit wurde ein erster Schmierstoff erstellt, der aus einer Mischung von 5 Gew.% N16 mit 95 Gew.% eines Flüssigkeitsgemisches, bestehend aus 95 Gew.% Wasser und 5 Gew.% W3, bestand.

Desweiteren wurde ein zweiter Schmierstoff erstellt, der durch Vermischen von 50 Gew.% N16 und 2,5 Gew.% W3 sowie 47,5 Gew.% Wasser hergestellt wurde.

Von den beiden zuvor aufgeführten Schmierstoffen wurde ein Reichert-Test nach VKIS - Arbeitsblatt Nr. 6 durchgeführt, der zu folgenden Ergebnissen führte:
erster Schmierstoff: RT = 17 mm²
zweiter Schmierstoff: RT = 12 mm²

Desweiteren wurde von beiden zuvor aufgeführten Schmierstoffen ein Korrosionstest nach DIN 51360/2 ausgeführt. Hierbei zeigte sich, daß beide Schmierstoffe bei diesem Korrosionstest mit Note 0 zu bewerten sind, was bedeutet, daß beide Schmierstoffe einen hervorragenden Korrosionstest ergeben.

### Nachweis der Vermisch- und Auftrennbarkeit

In einem Labor-Mischer (Hersteller: Janke & Kunkel GmbH & Co. KG, 79219 Staufen, Typ: Ultra-Turrax T 25) wurde ein Schmierstoff aus 95 Gew.% Wasser (W1) und 5 Gew.% der nachfolgend aufgeführten und in Tabelle 2 bezüglich der Zusammensetzung quantifizierten zweiten Flüssigkeiten während einer Minute und 20.000 Umdrehungen/Minute beim Raumtemperatur erstellt.

Nach dem Vermischen wurde visuell nach 60 Minuten bei Raumtemperatur beurteilt, ob eine Phasentrennung auftrat oder nicht.

Das Ergebnis dieser Beurteilung ist in der folgenden Tabelle wiedergegeben.

**Tabelle 3**

| | |
|---|---|
| Schmierstoff durch Vermischen von | |
| 95 % W1 mit 5 % N1 | minimale Separierung der Ölschicht erkennbar |
| 95 % W1 mit 5 % N2 | geringe Abscheidung der Ölschicht |
| 95 % W1 mit 5 % N5 | keine Abtrennung der Ölschicht sichtbar |
| 95 % W1 mit 5 % N6 | keine Abtrennung der Ölschicht sichtbar |
| 95 % W1 mit 5 % N7 | geringe Abscheidung der Ölschicht |
| 95 % W1 mit 5 % N8 | geringe Abscheidung der Ölschicht |
| 95 % W1 mit 5 % N9 | geringe Abscheidung der Ölschicht |

Es wurde ein zweiter Test durchgeführt, wobei hierbei unter den zuvor wiedergegebenen Bedingungen vermischt wurde.

Die so erstellten Schmierstoffe wurde anschließend bei 60 °C in einer Laborzentrifuge (Hersteller: Petulfo Split AB, Stockholm, Typ: Hotspin MK 1-220) bei 3.000 Umdrehungen/Minute während fünf Minuten zentrifugiert.

Der jeweilige Schmierstoff wurde aus 95 Gew. % eines Flüssigkeitsgemisches, das zuvor aus 95 Gew.% Wasser und der zuvor angegebenen hydrophilen Flüssigkeiten W1 bis W6 herstellt war, und 5 Gew. % der zweiten hydrophoben Flüssigkeiten N1 bis N9 erstellt.

In der nachfolgenden Tabelle sind die Zeiten in Minuten angegeben, die nach dem Zentrifugieren erforderlich waren, bis sich die Ölphase deutlich durch eine klare Trennschicht von der wäßrigen Phase trennte.

**Tabelle 4**

| | N1 | N2 | N3 | N4 | N5 | N6 | N7 | N8 | N9 |
|---|---|---|---|---|---|---|---|---|---|
| W1 | > 3 | >3 | >3 | >3 | >3 | >3 | >3 | >3 | >3 |
| W2 | > 3 | >3 | >3 | >3 | >3 | >3 | >3 | >3 | >3 |
| W3 | < 3 | <3 | <3 | <3 | <3 | <3 | <3 | <3 | <3 |
| W4 | < 3 | <3 | <3 | <3 | <3 | <3 | <3 | <3 | <3 |
| W5 | < 3 | <3 | <3 | <3 | <3 | <3 | <3 | <3 | <3 |
| W6 | < 3 | <3 | <3 | <3 | <3 | <3 | <3 | <3 | <3 |

In einer weiteren Versuchsreihe wurde überprüft, ob sich unterschiedlich aufgebaute Schmierstoffe, die durch Vermischen während einer Minute bei Raumtemperatur und 20.000 Umdrehungen/Minute hergestellt werden, einwandfrei produzieren lassen.

Anschließend wurde der so erstellte jeweilige Schmierstoff in einer Zentrifuge aufgetrennt. Der Grad der Auftrennung wurde bei Raumtemperatur nach einer Verweilzeit von fünf Minuten nach dem Zentrifugieren beurteilt. Hierbei wurden für das Vermischen und das Auftrennen die Bedingungen ausgewählt, die bereits vorstehend beschrieben sind.

In einer Versuchsreihe wurden jeweils 20 Schmierstoffe erstellt, bei denen 95 Gew.% eines Flüssigkeitsgemisches, bestehend aus 95 Gew.% Wasser und 5 Gew.% der Flüssigkeit W3 (Tabelle 1), mit 5 Gew.% der zweiten Flüssigkeiten N1 bis N20, deren Aufbau vorstehend in der Tabelle 2 wiedergegeben ist, vermischt wurden.

Als Ergebnis dieser ersten Versuchsreihe ist festzuhalten, daß sich alle Schmierstoffe einwandfrei vermischen lassen und daß durch Zentrifugieren bei 60 °C nach einer maximalen Verweilzeit von 5 Minuten nach dem Zentrifugieren einwandfrei auftrennen ließen.

In einer zweiten Versuchsreihe wurden 60 weitere Schmierstoffe erstellt, die durch Vermischen von 95 Gew.% eines Flüssigkeitsgemisches, bestehend aus 95 Gew.% Wasser und 5 Gew.% der Flüssigkeit W4, W5 oder W6, mit 5 Gew.% jeweils der Flüssigkeiten N1 bis N20 hergestellt wurden.

Auch diese 60 Schmierstoffe gemäß der zweiten Versuchsreihe ließen sich einwandfrei vermischen und durch Zentrifugieren einwandfrei wieder auftrennen, wobei bei der Auftrennung eine deutliche Trennlinie zwischen der wäßrigen und der öligen Phase entstand.

In einer dritten Versuchsreihe wurden 10 Schmierstoffe erstellt, die als erste Flüssigkeit 2,5 Gew.% von W3 sowie 47,5 Gew.% Wasser und als zweite Flüssigkeit jeweils 50 Gew.% von N3 bis N7 sowie von N16 bis N20 enthielt.

Analog hierzu wurde eine vierte Versuchsreihe durchgeführt, wobei die hier erstellten 30 Schmierstoffe 2,5 Gew.% W4, W5 oder W6 sowie 47,5 Gew.% Wasser und 50 Gew.% N3 bis N7 sowie 50 Gew.% N16 bis N20 enthielten.

In einer fünften Versuchsreihe wurden fünf Schmierstoffe erstellt, die 0,5 Gew.% W3 sowie 9,5 Gew.% Wasser und 90 Gew.% N3, N4, N7, N8 oder N9 enthielten.

In einer sechsten Versuchsreihe wurden 15 Schmierstoffe erstellt, die 0,5 Gew.% W4, W5 oder W6 sowie 9,5 Gew.% Wasser und jeweils 90 Gew.% N3, N4, N7, N8 oder N9 enthielten.

In einer siebten Versuchsreihe wurden acht Schmierstoffe erstellt, die 0,75 Gew.% W3 sowie 14,25 Gew.% Wasser und 85 Gew.% N10, N11, N12, N16, N17, N18, N19 oder N20 enthielten.

In einer achten Versuchsreihe wurden 24 Schmierstoffe erstellt, die jeweils 0,75 Gew.% W4, W5 oder W6 sowie 14,25 Gew.% Wasser und 85 Gew.% N10, N11, N12, N16, N17, N18, N19 oder N20 enthielten.

In einer neunten Versuchsreihe wurden fünf Schmierstoffe erstellt, die jeweils 1 Gew.% W3 sowie 19 Gew.% Wasser und 80 Gew.% N5, N6, N13, N14 oder N15 enthielten.

In einer zehnten Versuchsreihe wurden 15 Schmierstoffe erstellt, die jeweils 1 Gew.% W4, W5 oder W6 sowie 19 Gew.% Wasser und 80 Gew.% N5, N6, N13, N14 oder N15 enthielten.

All die zuvor hergestellten Schmierstoffe gemäß der dritten bis zehnten Versuchsreihe ergaben nach dem Vermischen eine homogene Flüssigkeit. Es wurde visuell beurteilt, ob in einer vorgegebenen maximalen Trennzeit von fünf Minuten nach dem Zentrifugieren eine einwandfreie Auftrennung in eine ölige und eine wäßrige Phase stattgefunden hat. Bei allen untersuchten Schmierstoffen ist festzuhalten, daß diese Trennung einwandfrei verlief, so daß eine deutliche klare Trennlinie erkennbar war.

Um den Nachweis zu führen, daß auch nach wiederholtem Vermischen und wiederholter Auftrennung die Trennung einwandfrei verlief, wurden zunächst sechs Schmierstoffe, die jeweils 95 Gew.% eines Flüssigkeitsgemisches, bestehend aus 95 Gew.% Wasser und 5 Gew.% W3, und 5 Gew.% N3, N11, N14, N16, N17 oder N20 enthielten, erstellt. Anschließend wurden diese Schmierstoffe unter den zuvor benannten Bedingungen zentrifugiert. Nach einer Verweilzeit von maximal fünf Minuten wurde eine visuelle Beurteilung dahingehend durchgeführt, ob eine deutliche Auftrennung stattgefunden hatte und eine Trennlinie eindeutig erkennbar war. Bei allen untersuchten Schmierstoffen war dies der Fall.

Die aufgetrennten Schmierstoffe wurden erneute vermischt und hiernach unter den vorstehend genannten Bedingungen aufgetrennt. Dieser Vorgang wurde 19 mal wiederholt, wobei sich das vorstehend genannte Ergebnis nicht änderte.

In einer weiteren Versuchsserie wurden Schmierstoffe erstellt, die 0,5 Gew.% W3, 9,5 Gew.% Wasser und 90 Gew.% jeweils von N3, N11, N14, N16, N17 oder N20 enthielten. Auch diese Schmierstoffe wurden 20 mal aufgetrennt und wieder erneut vermischt, wobei festgestellt werden konnte, daß selbst nach dem 20. mal Auftrennen unter den vorstehend genannten Bedingungen eindeutig eine Auftrennung in zwei Phasen mit deutlich erkennbarer Trennlinie auftrat.

## Patentansprüche

1. Verfahren zur Kühlung und/oder Schmierung bei der Be- und/oder Verarbeitung von Werkstücken, insbesondere von Werkstücken aus Metall, Kunststoff, Glas oder Keramik, dadurch gekennzeichnet, daß der zur Kühlung bzw. Schmierung verwendete Schmierstoff unmittelbar vor seiner Anwendung durch intensive Vermischung von mindestens zwei, den Schmierstoff bildenden und getrennt aufbewahrten Flüssigkeiten erstellt wird, wobei als erste Flüssigkeit eine wasserhaltige hydrophile Flüssigkeit und als zweite Flüssigkeit eine hydrophobe Flüssigkeit ausgewählt werden.

2. Verfahren nach Anspruch 1, dadurch gekennzeichnet, daß die intensive Vermischung der mindestens zwei Flüssigkeiten in einer von den beiden Flüssigkeiten durchströmten Düse, in einem Hochleistungsmischer und/oder in einem Prallmischer durchgeführt wird.

3. Verfahren nach Anspruch 1 oder 2, dadurch gekennzeichnet, daß als Hochleistungsmischer ein solcher Mischer ausgewählt wird, dessen Drehzahl zwischen 1.000 Umdrehungen/Minute und 30.000 Umdrehungen/Minute einstellbar ist.

4. Verfahren nach Anspruch 2 oder 3, dadurch gekennzeichnet, daß die intensive Vermischung der beiden Flüssigkeiten in einem Rotor-Stator-Mischer bei Drehzahlen zwischen 2.000 Umdrehungen/Minute und 26.000 Umdrehungen/Minute, insbesondere bei Drehzahlen zwischen 8.000 Umdrehungen/Minute und 24.000 Umdrehungen/Minute, durchgeführt wird.

5. Verfahren nach einem der vorangehenden Ansprüche, dadurch gekennzeichnet, daß der für die Kühlung bzw. Schmierung der Werkstücke verwendete Schmierstoff nach der Be- bzw. Verarbeitung der Werkstücke aufgefangen wird.

6. Verfahren nach Anspruch 5, dadurch gekennzeichnet, daß der aufgefangene Schmierstoff bei der Be- und/oder Verarbeitung von weiteren Werkstücken wieder verwendet wird.

7. Verfahren nach Anspruch 6, dadurch gekennzeichnet, daß der aufgefangene Schmierstoff vor seiner Wiederverwendung mit einer vorgegebenen Menge der ersten Flüssigkeit und/oder einer vorgegebenen Menge der zweiten Flüssigkeit vermischt wird.

8. Verfahren nach Anspruch 5, dadurch gekennzeichnet, daß der aufgefangene Schmierstoff zumindestens teilweise wieder in die erste Flüssigkeit und/oder die zweite Flüssigkeit aufgetrennt wird.

9. Verfahren nach Anspruch 8, dadurch gekennzeichnet, daß der aufgefangene Schmierstoff zur Auftrennung der ersten Flüssigkeit von der zweiten Flüssigkeit in einen Ruhetank geleitet wird.

10. Verfahren nach Anspruch 8 oder 9, dadurch gekennzeichnet, daß der aufgefangene Schmierstoff zur Abtrennung der ersten Flüssigkeit von der zweiten Flüssigkeiten einem Separator zugeführt wird.

11. Verfahren nach Anspruch 10, dadurch gekennzeichnet, daß in dem Separator die erste Flüssigkeit von der zweiten Flüssigkeit abzentrifugiert wird.

12. Verfahren nach Anspruch 11, dadurch gekennzeichnet, daß die erste Flüssigkeit von der zweiten Flüssigkeit bei einer Temperatur zwischen 20 °C und 80 °C abzentrifugiert wird.

13. Verfahren nach einem der Ansprüche 8 bis 12, dadurch gekennzeichnet, daß die aufgetrennten Flüssigkeiten wieder miteinander vermischt und als Schmierstoff bei der Be- bzw. Verarbeitung von weiteren Werkstücken wieder verwendet werden.

14. Verfahren nach einem der vorangehenden Ansprüche, dadurch gekennzeichnet, daß die erste Flüssigkeit mit der zweiten Flüssigkeit in einem vorgegebenen Mengenverhältnis miteinander vermischt wird.

15. Verfahren nach einem der vorangehenden Ansprüche, dadurch gekennzeichnet, daß das Mengenverhältnis der ersten Flüssigkeit zur zweiten Flüssigkeit zwischen 99,9 Gew.% : 0,1 Gew.% und 0,1 Gew.% : 99,9 Gew.% variiert.

16. Verfahren nach einem der vorangehenden Ansprüche, dadurch gekennzeichnet, daß als erste Flüssigkeit eine solche Flüssigkeit ausgewählt wird, die neben Wasser ggf. mindestens ein Glykolderivat, insbesondere Polyethylenglykol, mindestens ein EP-Additiv, mindestens ein Korrosionsschutzmittel, mindestens ein Bakterizid, mindestens ein Fungizid, mindestens ein Bakteriostatikum und/oder mindestens einen Alkalispender umfaßt.

17. Verfahren nach Anspruch 16, dadurch gekennzeichnet, daß in der ersten Flüssigkeit neben
Wasser in einer Konzentration zwischen 100 Gew.% und 40 Gew.% noch
das Bakterostatikum in einer Konzentration zwischen 0 Gew.% und 60 Gew.%;
das EP- Additiv in einer Konzentration zwischen 0 Gew.% und 60 Gew.%;
das Korrosionsschutzmittel in einer Konzentration zwischen 0 Gew.% und 60 Gew.%;
das Bakterizid in einer Konzentration zwischen 0 Gew.% und 60 Gew.%;
das Fungizid in einer Konzentration zwischen 0 Gew.% und 60 Gew.%; und/oder
der Alkalispender, insbesondere ein Alkalihydroxid, in einer Konzentration zwischen 0 Gew.% und 60 Gew.%
enthalten ist.

18. Verfahren nach einem der vorangehenden Ansprüche, dadurch gekennzeichnet, daß als zweite Flüssigkeit eine solche hydrophobe Flüssigkeit ausgewählt wird, die eine Viskosität bei 40 °C zwischen 2 mm²/s und 1.500 mm²/s, insbesondere eine Viskosität zwischen 10 mm²/s und 100 mm²/s, aufweist.

19. Verfahren nach Anspruch 18, dadurch gekennzeichnet, daß als zweite Flüssigkeit eine solche hydrophobe Flüssigkeit ausgewählt wird, deren Dichte bei 15 °C zwischen 800 kg/m³ und 950 kg/m³, insbesondere zwischen 830 kg/m³ und 910 kg/m³, variiert.

20. Verfahren nach einem der vorangehenden Ansprüche, dadurch gekennzeichnet, daß als zweite Flüssigkeit eine solche hydrophobe Flüssigkeit ausgewählt wird, die eine lipophile Komponente in einer Konzentration zwischen 20 Gew.% und 100 Gew.%, insbesondere zwischen 65 Gew.% und 99,5 Gew.%, aufweist.

21. Verfahren nach Anspruch 20, dadurch gekennzeichnet, daß die lipophile Komponente ein naphtenbasisches Öl, ein paraffinbasisches Öl, ein Weißöl, ein Poly[α]olefin, ein nativer Ester, ein synthetischer Ester, ein nicht wassermischbares Polyglykol und/oder ein Fettalkohol ist.

22. Verfahren nach Anspruch 21, dadurch gekennzeichnet, daß der native Ester pflanzliche Triglyceride, tierische Triglyceride und/oder naturidentische synthetische Triglyceride, daß der synthetische Ester Mono- und/oder Dicarbonsäureester, Polycarbonsäureester, Polyölester und/oder Mischungen der zuvor genannten Ester und daß die Fettalkohole Cetylalkohol, Oleylalkohol sowie Guerbet-Alkohole umfaßt.

23. Verfahren nach einem der vorangehenden Ansprüche, dadurch gekennzeichnet, daß als zweite Flüssigkeit eine solche hydrophobe Flüssigkeit ausgewählt wird, die neben der lipophilen Komponente desweiteren noch mindestens ein Antioxidans, mindestens einen Stabilisator, mindestens ein EP-Additiv, mindestens ein Korrosionsschutzmittel, mindestens ein AN-Zusatz, mindestens einen Entschäumer und/oder mindestens ein Fungizid umfaßt.

24. Verfahren nach einem der vorangehenden Ansprüche, dadurch gekennzeichnet, daß als zweite Flüssigkeit eine solche Flüssigkeit ausgewählt wird, die
das naphthenbasische Öl in einer Konzentration zwischen 0 Gew.% und 100 Gew.%;
das paraffinbasische Öl in einer Konzentration zwischen 0 Gew.% und 100 Gew.%;
den nativen Ester in einer Konzentration zwischen 0 Gew.% und 100 Gew.%;
den synthetischen Ester in einer Konzentration zwischen 0 Gew.% und 100 Gew.%;
das Antioxidans in einer Konzentration zwischen 0 Gew.% und 3 Gew.%;
den Stabilisator in einer Konzentration zwischen 0 Gew.% und 15 Gew.%;
das EP-Additiv in einer Konzentration zwischen 0 Gew.% und 20 Gew.%;
das Korrosionsschutzmittel in einer Konzentration zwischen 0 Gew.% und 12 Gew.%;
den AN-Zusatz in einer Konzentration zwischen 0 Gew.% und 3 Gew.%;
den Entschäumer in einer Konzentration zwischen 0 Gew.% und 1 Gew.%; und/oder
das Fungizid in einer Konzentration zwischen 0 Gew.% und 2 Gew.%
umfaßt.

25. Verfahren nach einem der vorangehenden Ansprüche, dadurch gekennzeichnet, daß mindestens eine der beiden Flüssigkeiten einen Demulgator enthält.

26. Verfahren nach Anspruch 25, dadurch gekennzeichnet, daß der mindestens eine Demulgator vor der Vermischung der beiden Flüssigkeiten zu der ersten Flüssigkeit zugesetzt wird.

27. Verfahren nach Anspruch 25 oder 26, dadurch gekennzeichnet, daß ein Demulgator ausgewählt wird, der durch die nachfolgende Formel (1) wiedergegeben wird,
CH₃-CH₂-CH₂-CH₂-0-(EO)ₓ (PO)_{y} - H (Formel 1)
wobei
(EO) ein Ethylenoxid-Rest der Summenformel C₂H₄O,
(PO) ein Propylenoxid-Rest der Summenformel C₃H₆O,
x eine ganze Zahl zwischen 0 und 150 und
y eine ganze Zahl zwischen 0 und 150
bedeuten, gleichzeitig jedoch x und y nicht 0 sind.

28. Verfahren nach einem der Ansprüche 25 bis 27, dadurch gekennzeichnet, daß die Konzentration des Demulgators in der ersten Flüssigkeit zwischen 0,001 Gew.% und 10 Gew.% variiert.

29. Verfahren nach Anspruch 25, dadurch gekennzeichnet, daß der zweiten Flüssigkeit ein Demulgator zugesetzt wird.

30. Verfahren nach Anspruch 29, dadurch gekennzeichnet, daß ein solcher Demulgator ausgewählt wird, der ein Alkali- und/oder Erdalkalisalz einer organischen Sulfonsäure darstellt.

31. Verfahren nach Anspruch 29 oder 30, dadurch gekennzeichnet, daß ein Demulgator ausgewählt wird, der durch die nachfolgende Formel (2) wiedergegeben wird, 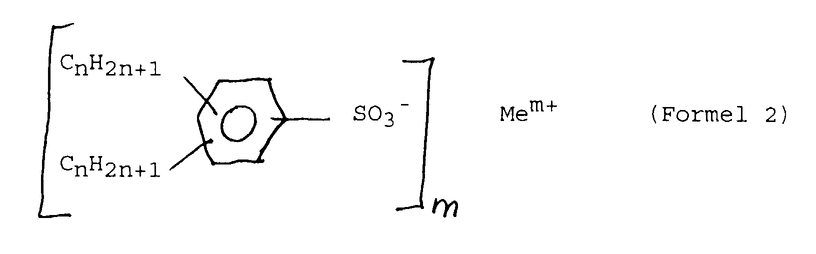 wobei
n eine ganze Zahl zwischen 0 und 12,
m 1 oder 2 und
Me ein Metall, insbesondere ein Alkali- oder Erdalkalimetall
bedeuten.

32. Verfahren nach einem der vorangehenden Ansprüche, dadurch gekennzeichnet, daß das be- bzw. verarbeitete Werkstück mit einem weiteren Fluid beaufschlagt wird.

33. Verfahren nach Anspruch 32, dadurch gekennzeichnet, daß das weitere Fluid die erste Flüssigkeit ist.

34. Verfahren nach Anspruch 32, dadurch gekennzeichnet, daß das weitere Fluid Luft ist.

35. Verfahren nach einem der vorangehenden Ansprüche, dadurch gekennzeichnet, daß den vermischten beiden Flüssigkeiten vor dem Auftreffen derselben auf das Werkstück die erste oder zweite Flüssigkeit separat zugesetzt wird.
